# EUROPEAN PATENT SPECIFICATION

(11) **EP 1 435 465 B1**
(45) Date of publication and mention of the grant of the patent: **02.11.2006**
(21) Application number: 04008668.8
(22) Date of filing: 11.04.1998
(51) Int. Cl.: F16C 32/06

(54) **Dynamic pressure bearing made of porous material**
Dynamisches Drucklager aus porösem Material
Palier hydrodynamique en matériau poreux

(43) Date of publication of application: 07.07.2004
(62) Divisional of application: 98106698.8
(73) Proprietor: JTEKT Corporation, Chuo-ku, Osaka-shi Osaka 542-8502 (JP)
(72) Inventor: Takahashi, Takeshi, Kashiba-shi Nara-ken (JP); Onishi, Masayoshi, Tondabayashi-shi Osaka-fu (JP)
(74) Representative: Selting, Günther

(56) References cited:
- EP-A- 0 002 292
- EP-A- 0 289 886
- DE-A- 3 230 232
- DE-A- 3 248 186
- DE-A- 3 326 316
- DE-A- 3 339 040
- US-A- 2 855 249
- US-A- 3 169 807
- US-A- 5 520 038
- PATENT ABSTRACTS OF JAPAN vol. 0152, no. 32 (M-1124), 13 June 1991 (1991-06-13) & JP 3 071944 A (NACHI FUJIKOSHI CORP), 27 March 1991 (1991-03-27)

## Description

### BACKGROUND OF THE INVENTION

The present invention relates to a dynamic pressure bearing using porous material.

As this type of dynamic pressure bearing, there has conventionally been provided one in which a sleeve for supporting a shaft is made by sintering process of metal powder and in which dynamic pressure grooves are formed by a metal mold pattern for sintering process.

However, in this conventional dynamic pressure bearing having a sleeve of sintered metal, because of many pores present in the sintered metal, pressure fluid escapes outside through pores of the dynamic pressure grooves, causing a problem that enough dynamic pressure could not be generated.

### SUMMARY OF THE INVENTION

Therefore, an object of the present invention is to provide a dynamic pressure bearing capable of generating enough dynamic pressure even with the use of porous material.

In order to achieve the above object, the present invention provides a dynamic pressure bearing comprising the features of claim 1.

According to the dynamic pressure bearing of this invention, since the dynamic pressure grooves are formed on the porous material, the porous material at the surface of the dynamic pressure grooves is crushed so that substantially no voids are present in the porous material at the surface of the grooves. Thus, enough dynamic pressure can be generated.

In an embodiment, a bearing surface of the supporting member or the supported member in which the dynamic pressure grooves are formed is crushed by sizing process so that substantially no voids are present in the porous material at the bearing surface.

In the dynamic pressure bearing of this embodiment, the bearing surface is crushed by sizing process so that substantially no voids are present in the bearing surface of the porous material. As a result, the bearing surface can be enhanced in airtightness. Further, the material at the dynamic pressure grooves that has been fluidized by the rolling process is absorbed by the voids of their surrounding porous material. As a result, swells are not produced in the vicinities of the dynamic pressure grooves. Also, even if swells have been produced with the use of a porous material of high density, the swells in the vicinities of the dynamic pressure grooves on the bearing surface formed during the rolling process can be flattened by the sizing process.

### BRIEF DESCRIPTION OF THE DRAWINGS

The present invention will become more fully understood from the detailed description given hereinbelow and the accompanying drawings which are given by way of illustration only, and wherein:
Fig. 1 is a cross-sectional perspective view of a sleeve formed with dynamic pressure grooves in a dynamic pressure bearing according to a first embodiment of the present invention;
Fig. 2 is an enlarged sectional view of a dynamic pressure groove and a bearing surface of Fig. 1; and
Fig. 3 is a perspective view of a shaft formed with dynamic pressure grooves in a dynamic pressure bearing according to a second embodiment of the present invention.

### DETAILED DESCRIPTION OF THE PREFERRED EMBODIMENTS

Hereinbelow, the present invention is described in detail by an embodiment thereof illustrated in the accompanying drawings.

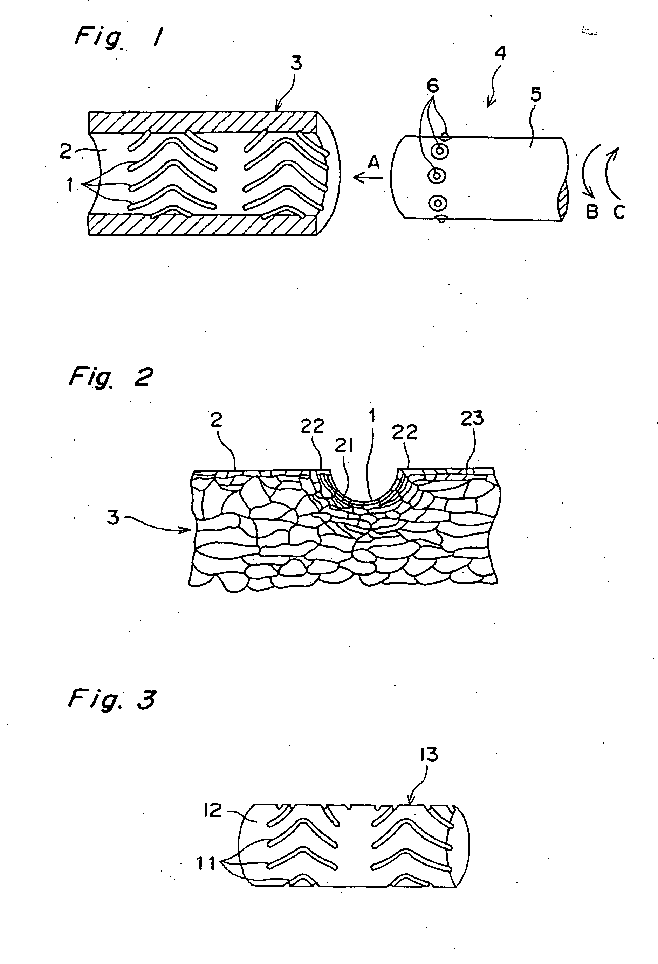

Fig. 1 shows a sleeve 3 serving as a support member, in which a plurality of generally V-shaped dynamic pressure grooves 1 are formed at an inner circumferential surface 2, as well as a rolling machine 4. This sleeve 3 is made of sintered metal fabricated by compression molding of metal powder and high temperature heating and solidification of the molded product. This sintered metal is an example of the porous material. The rolling machine 4, on the other hand, comprises cylindrical part 5 and a plurality of hemispherical protrusions 6 arranged at equal intervals circumferentially of the cylindrical part 5. The hemispherical protrusions 6 can be made to appear to and disappear from the cylindrical part 5 by unshown pins or oil pressure. Further, the rolling machine 4 comprises unshown feed device and turning device, so that the cylindrical part 5 of the rolling machine 4 can be inserted into the sleeve 3 and besides turned both forward and reverse while keeping inserted in the sleeve 3.

The dynamic pressure bearing of this constitution with dynamic pressure grooves are formed in the following manner.

With the sleeve 3 fixed, the feeding device of the rolling machine 4 is driven, the rolling machine 4 is moved in a direction of arrow A in Fig. 1 while making the central axis of the cylindrical part 5 and the central axis of the sleeve 3 coincident with each other so that the cylindrical part 5 is inserted into the sleeve 3. Also, the cylindrical part 5 is pushed into the sleeve 3 until the cylindrical part 5 reaches a specified position, where the plurality of hemispherical protrusions 6 are protruded from the outer circumferential surface of the cylindrical part 5 so as to be pushed into the sleeve 3. The place where this pushing is started results in a point where the dynamic pressure grooves 1 start to be formed. Next, the cylindrical part 5, while being advanced, is turned in a direction of B in Fig. 1, i.e. counterclockwise as viewed toward the sleeve 3. Further, when the cylindrical part 5 has been moved up to a specified position while being advanced and turned, the cylindrical part 5 is turned reversely in a direction of arrow C in Fig. 1, i.e. clockwise. As a result, traces of the hemispherical protrusions 6 form generally V-shaped dynamic pressure grooves 1 as shown in Fig. 1. For an end of the formation of the dynamic pressure grooves 1, the hemispherical protrusions 6 are tucked in the cylindrical part 5. Thus, by advancing and turning the rolling machine 4 having the plurality of hemispherical protrusions 6, a plurality of dynamic pressure grooves 1 are formed with circumferentially fixed intervals therebetween simultaneously at the inner surface of the sleeve 3.

Next, an unshown sizing machine larger than the diameter of the inner circumferential surface of the sleeve 3 is inserted into the sleeve 3 with the dynamic pressure grooves 1 formed, and sizing process is carried out. By this sizing process, the inner circumference of the sleeve is slightly increased in diameter, while the inner circumferential surface, i.e. bearing surface, of the sleeve formed with the dynamic pressure grooves is crushed, causing voids of the porous material in the bearing surface to substantially disappear. With sleeves made of nonporous ordinary metal material, there are some cases where swells are produced on the bearing surface in the vicinities of the dynamic pressure grooves formed in the rolling process. However, since the sleeve is made of porous material in the present invention, the material at the portions of the dynamic pressure grooves is absorbed by the voids of the porous material so that no swells are produced in the vicinities of the dynamic pressure grooves. When the porous material is of high density, indeed swells may be produced more or less, but they are pressed and flattened by the sizing process.

Fig. 2 is an enlarged sectional view of the sizing processed bearing surface 2 with the dynamic pressure grooves 1. Tissue 21 in proximity to a dynamic pressure groove 1 has been crushed so as to be fine by rolling, the voids having been substantially eliminated. Also, tissue 23 under the bearing surface 2 has become a fine tissue crushed by the sizing process. Like this, voids among metal particles of the bearing surface 2 have been crushed so as to be fine as in the dynamic pressure grooves 1, so that the bearing surface 2 has been enhanced in airtightness. Further, with the use of a porous material of high density, even if swells are produced in vicinities 22 of the dynamic pressure grooves 1 of the bearing surface 2 by the rolling process, these swells are pressed and flattened by the sizing process.

In this way, the dynamic pressure grooves 1 and the bearing surface 2 are formed in the sleeve 3 by rolling and sizing processes, respectively. Then, the radial dynamic pressure bearing according to the present embodiment is completed by inserting a shaft as a supported member, into the sleeve 3 as a supporting member.

In this dynamic pressure bearing of the embodiment, since the porous material at the surface of the dynamic pressure grooves 1 have been crushed so as to have substantially no voids, there is no possibility that the dynamic pressure fluid leaks out of the dynamic pressure grooves 1, so that enough dynamic pressure can be generated.

Also, in the dynamic pressure bearing of this embodiment, the bearing surface 2 of the sleeve 3 with the dynamic pressure grooves 1 has been crushed by sizing so that substantially no voids are present in the porous material, the bearing surface 2 can be maintained airtight. Further, since the material at the dynamic pressure grooves that has been fluidized by the rolling process is absorbed by the voids of their surrounding porous material, swells are not produced in the vicinities of the dynamic pressure grooves. Also, even if swells have been produced with the use of a porous material of high density, the swells in the vicinities of the dynamic pressure grooves 1 formed during the rolling process can be flattened by the sizing process.

Fig. 3 shows a shaft 13 having a plurality of generally V-shaped dynamic pressure grooves 11 formed at its outer circumferential surface 12. This shaft 13 is made of a sintered metal which is a porous material. A rolling machine to be used, although not shown, has a plurality of hemispherical protrusions arranged at equal intervals circumferentially in an inner circumferential portion of a cylindrical member. As in the first embodiment, the hemispherical protrusions can be made to appear and disappear while the rolling machine can be made to move and turn. The shaft 13 is inserted into this rolling machine, and the protrusions are protruded and pushed into the outer circumferential surface 12 of the shaft 13. Then, the rolling machine is moved and turned, by which the dynamic pressure grooves 11 are formed in the outer circumferential surface 12. The bearing surface 12 is sizing processed as in the first embodiment.

In this dynamic pressure bearing of this embodiment, since the porous material of the surface of the dynamic pressure grooves 11 has been crushed so that the voids have been eliminated as in the first embodiment, the dynamic pressure fluid never leaks out of the dynamic pressure grooves 11 so that enough dynamic pressure can be generated. Also, since the bearing surface 12 has been crushed by the sizing process so that substantially no voids are present in the porous material, the bearing surface 12 is good at airtightness. Further, vicinities of the dynamic pressure grooves 11 have no swells formed during the rolling process, being flat.

The above first and second embodiments have been described about radial bearings. However, also with thrust bearings, dynamic pressure grooves having substantially no voids in porous material can be formed by rolling process and a highly airtight, flat bearing surface can be obtained by sizing process.

It is noted that although sintered metal has been used for the whole sleeve 3 or shaft 13 in the first and second embodiments, it is also possible to use sintered metal only for the surface part including the inner circumferential surface of the sleeve or the outer circumferential surface of the shaft. Besides, the porous material is not limited to sintered metal.

As apparent from the foregoing description, in the dynamic pressure bearing of the present invention, the dynamic pressure grooves of the supporting member or supported member made of porous material are formed in such a manner that the porous material at the surface of the dynamic pressure grooves has been crushed by the rolling process so that substantially no voids are present in the porous material at the surface of the grooves. Therefore, the dynamic pressure fluid never leaks out of the dynamic pressure grooves, so that enough dynamic pressure can be generated.

In the dynamic pressure bearing of an embodiment of the present invention, the bearing surface of the supporting member or supported member formed with the dynamic pressure grooves has been crushed by sizing process so that substantially no voids are present in the porous material at the bearing surface. Therefore, the bearing surface can be maintained airtight. Further, since the material at the dynamic pressure grooves that has been fluidized by the rolling process is absorbed by the voids of their surrounding porous material, swells are not produced in the vicinities of the dynamic pressure grooves. Also, even if swells have been produced with the use of a porous material of high density, the swells in the vicinities of the dynamic pressure grooves formed during the rolling process can be eliminated by the sizing process into flatness.

## Claims

1. A dynamic pressure bearing in which at least one of a supporting member (3) and a supported member (13) is made of a porous material and in which dynamic pressure grooves (1, 11) are formed on the porous material, wherein
the dynamic pressure grooves (1, 11) are formed in such a manner that the porous material at a surface of the dynamic pressure grooves (1, 11) is crushed so that substantially no voids are present in the porous material at the surface of the dynamic pressure grooves (1, 11), wherein
a bearing surface (2, 12) of the supporting member (3) or the supported member (13) in which the dynamic pressure grooves (1, 11) are formed is crushed so that substantially no voids are present in the porous material at the bearing surface (2, 12).

2. The dynamic pressure bearing according to Claim 1, wherein the bearing surface (2, 12) is crushed by sizing process.

## Patentansprüche

1. Dynamisches Drucklager, bei dem mindestens ein stützendes Teil (3) und/oder ein gestütztes Teil (13) aus einem porösen Material besteht, und bei dem dynamische Druckrillen (1, 11) in dem porösen Material gebildet sind, wobei
die dynamischen Druckrillen (1, 11) derart ausgebildet sind, dass das poröse Material an der Oberfläche der dynamischen Druckrillen (1, 11) gepresst ist, so dass im wesentlichen keine Hohlräume in dem porösen Material an der Oberfläche der dynamischen Druckrillen (1, 11) vorhanden sind, wobei
eine Lagerfläche (2, 12) des stützenden Teils (3) oder des gestützten Teils (13), in der die dynamischen Druckrillen (1, 11) gebildet sind, gepresst ist, so dass im wesentlichen keine Hohlräume in dem porösen Material an der Lagerfläche (2, 12) vorhanden sind.

2. Dynamisches Drucklager nach Anspruch 1, bei dem die Lagerfläche (2, 12) durch einen Kalibriervorgang gepresst wird.

## Revendications

1. Palier hydrodynamique, dont au moins un élément de support (3) ou un élément supporté (13) est fabriqué d'un matériau poreux et dans lequel des rainures de pression hydrodynamique (1, 11) sont ménagées dans le matériau poreux,
les rainures de pression hydrodynamique (1, 11) étant ménagées des sorte que le matériau poreux à une surface des rainures de pression hydrodynamique (1, 11) est pressée de manière que sensiblement aucun vide n'existe dans le matériau poreux à la surface des rainures de pression hydrodynamique (1, 11),
une surface de palier (2, 12) de l'élément de support (3) ou de l'élément supporté, dans laquelle les rainures de pression hydrodynamique (1, 11) sont ménagées, est pressée de sorte que sensiblement aucun vide n'existe dans le matériau poreux à la surface de palier (2, 12).

2. Palier hydrodynamique selon la revendication 1, **caractérisé en ce que** la surface de palier (2, 12) est pressée par un procédé de calibrage.
